# FASCICULE DE BREVET EUROPEEN

(11) **EP 2 333 801 B1**
(45) Date de publication et mention de la délivrance du brevet: **04.05.2016**
(21) Numéro de dépôt: 10354078.7
(22) Date de dépôt: 22.11.2010
(51) Int. Cl.: H01H 33/66, H01R 13/53, H02B 13/00

(54) **Dispositif de raccordement électrique d'une barre appartenant à un jeu de barres à une traversée électrique appartenant à l'enveloppe isolante d'un appareil électrique de coupure**
Elektrische Anschlussvorrichtung einer Stromschiene mittels eines Verbinders mit einem Schaltgerät
Device for the electrical connection of a busbar with an isolated electric feedthrough to a circuit breaker

(30) Priorité: 14.12.2009 FR 0906034
(43) Date de publication de la demande: 15.06.2011
(73) Titulaire: Schneider Electric Industries SAS, 92500 Rueil-Malmaison (FR)
(72) Inventeur: Famy, François, 38050 Grenoble Cedex 09 (FR); Milan, Thierry, 38050 Grenoble Cedex 09 (FR); Kersusan, Jean-Pierre, 38050 Grenoble Cedex 09 (FR)
(74) Mandataire: Colette, Marie-Françoise

(56) Documents cités:
- WO-A1-2006/032626
- DE-A1- 3 210 223
- DE-A1- 4 224 673
- FR-A1- 2 292 352
- US-A- 3 323 097

## Description

La présente invention concerne un dispositif de raccordement électrique d'au moins une barre appartenant à un jeu de barres à une traversée électrique appartenant à l'enveloppe isolante d'un appareil électrique de coupure, selon le préambule de la revendication principale.

A l'intérieur d'une telle interface de raccordement se trouve une zone, située au niveau du raccordement de la barre et de l'insert, où trois matériaux différents, à savoir un conducteur, un isolant solide et un gaz se trouvent très proches l'un de l'autre, en un point appelé « point triple ».
Cette particularité rend cette zone très sensible aux champs électriques. Il peut en résulter un phénomène d'ionisation du gaz environnant, ce qui a pour effet d'endommager prématurément la tenue superficielle diélectrique du produit. La combinaison de ces contraintes, avec d'autres facteurs tels l'eau et d'autres agents agressifs (tels que des polluants contenus dans l'air, la pollution citadine ou industrielle) est un facteur aggravant.
Le plus souvent, ce point triple n'est pas protégé efficacement. Il est seulement prévu un déflecteur pour obtenir de bonnes performances diélectriques et les barres sont gainées. Il en résulte des problèmes de vieillissement accéléré des barres, en particulier dans les atmosphères polluées citées ci-dessus.

On connaît également des dispositifs de raccordement comportant un manchon placé sur la traversée et réalisant également un manchonnage de la barre, ledit manchon présentant à sa partie supérieure une ouverture destinée à être obturée par un bouchon destiné à masquer l'accès au raccordement électrique.
Or, ce manchon doit nécessairement avoir un profil adapté au profil de la traversée sur laquelle il est placé.

On connaît également le document DE 42 24 673 décrivant un dispositif de raccordement comportant les caractéristiques du préambule de la revendication 1.
Or, ce dispositif ne facilite pas l'installation de dispositifs rapportés tels les diviseurs, capacités etc..., ces dispositifs étant destinés par exemple à indiquer la présence de tension ou à mesurer la tension.

La présente invention résout ces problèmes et propose un dispositif de raccordement d'une barre à une traversée de conception simple, permettant d'améliorer sous l'angle diélectrique la tenue au vieillissement du jeu de barres en ambiances difficiles, ledit dispositif ne nécessitant pas de profil particulier pour les traversées, pouvant donc s'adapter à toutes les traversées actuelles et facilitant l'installation des dispositifs rapportés précités.

A cet effet, la présente invention a pour objet un dispositif de raccordement du genre précédemment mentionné, ce dispositif étant caractérisé par les caractéristiques de la partie caractérisante de la revendication 1.

Selon une autre caractéristique, la partie isolante de la traversée comporte une partie de forme conique et une partie de forme évasée du côté de l'appareil.

Selon une autre caractéristique, ce dispositif comporte un bouchon, un diviseur résistif, un diviseur capacitif ou une capacité destinée à participer à l'indication de présence ou d'absence de tension, destiné à être mis en place à l'intérieur de l'orifice tubulaire précité.

Selon une autre caractéristique, le bouchon, le diviseur résistif, le diviseur capacitif ou la capacité, est fixé par des moyens d'encliquetage à l'intérieur dudit orifice.

Selon une autre caractéristique, les moyens d'encliquetage précités comportent une partie d'épaisseur augmentée prévue à l'extrémité du manchon située du côté extérieur de l'appareil, suivie d'une partie d'épaisseur régulièrement amincie située à l'intérieur de l'orifice tubulaire.

Selon une autre caractéristique, le déflecteur précité est réalisé en un métal non ferreux, tel l'aluminium, ou bien en un matériau ferreux, ou bien en un matériau polymère chargé pour être rendu semi-conducteur.

Selon une autre caractéristique, le manchon précité se prolonge sur au moins une partie de la barre, ladite partie étant située à l'extérieur dudit déflecteur de manière à réaliser un manchonnage au moins partiel de ladite barre.

Selon une autre caractéristique, le matériau souple précité est un élastomère ou un TPE par exemple du silicone ou EPDM.

Selon une autre caractéristique, ledit appareil est un interrupteur électrique moyenne tension.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle, en coupe axiale, d'un dispositif de raccordement selon l'invention, selon une première réalisation comportant un bouchon,
- La figure 2 est une vue identique à la précédente, selon une seconde réalisation comportant une capacité destinée à l'indication de présence/absence de tension,
- La figure 3 est une vue identique à la précédente, selon une troisième réalisation de l'invention comportant un diviseur capacitif, et
- La figure 4 est une vue identique à la précédente, selon une quatrième réalisation comportant un diviseur résistif.

Sur les figures, a été représenté un dispositif de raccordement électrique D selon l'invention, mis en place sur une traversée 1 appartenant à un interrupteur électrique moyenne ou haute tension, de manière à réaliser le raccordement électrique entre une barre 2 et un insert 3 situé à l'intérieur de cette traversée 1.

Cette traversée 1 comporte une partie de forme sensiblement conique 1a dont le plus petit diamètre se trouve du côté du dispositif de raccordement D, cette partie conique se terminant à sa base par une partie évasée 1b, cette partie étant reliée à une partie cylindrique 1c dont le diamètre correspond sensiblement à celui de l'extrémité libre 1e de la partie conique précitée.

A l'intérieur de cette traversée 1 se trouve un insert métallique 3 de forme cylindrique et dont l'axe X est confondu avec l'axe de la traversée, cet insert dépassant légèrement la traversée du côté du dispositif de raccordement et étant entouré par une partie isolante 1d. Sur cet insert, est destiné à être relié électriquement la partie d'extrémité 2a de la barre 2. Cette partie d'extrémité 2a est aplatie et est reliée à la portion de barre principale de section circulaire 2b par une partie conique 2c. Cette barre sera de préférence cylindrique mais pourra présenter d'autres formes. De plus, cette barre pourra être pleine ou creuse.

Ce dispositif comporte également un déflecteur 4 formant écran conducteur, placé autour de la zone de raccordement 5. Ce déflecteur 4 présente une forme extérieure conique évasée en direction de la traversée 1. Il est formé par une première partie 4a de forme sensiblement annulaire suivie par une partie en forme de disque 4b suivie d'une autre partie 4c de forme sensiblement annulaire d'épaisseur réduite par rapport à la première.

Conformément à l'invention, ce déflecteur 4 est surmoulé par un matériau souple sur sensiblement toute sa surface extérieure formant ainsi un manchon 6 de forme sensiblement cylindrique comportant à sa base une partie 6a apte à venir s'appliquer sur la surface conique 1a de la traversée, et à sa partie supérieure, une partie 6b pliée de manière arrondie en direction de l'axe Y du manchon 6, puis en direction de l'appareil, de manière à former un orifice tubulaire 7. De même, le manchon 6 comporte une partie d'épaisseur réduite 8 remontant le long de la surface intérieure de la seconde partie annulaire précitée 4c du déflecteur, créant ainsi un espace 9 entre cette partie en élastomère 8 et la zone de raccordement 5 permettant l'introduction d'un gaz.

Le dispositif comporte également des moyens de fixation du déflecteur 4 sur la barre, lesdits moyens comportant une vis 10 destinée à traverser deux orifices en regard appartenant respectivement au déflecteur 4 et à la barre 2 et destinée à être vissée dans un alésage taraudé 10b formé dans ledit insert 3, la base de la tête 10a de vis étant en appui sur le déflecteur 4 par l'intermédiaire d'une rondelle, et la barre 2 étant interposée entre le déflecteur 4 et l'insert 3.

Selon l'invention, la pression appliquée par le manchon 6 sur la traversée 1 est exercée par le déflecteur 4 étant réalisé en un matériau relativement rigide. Ce déflecteur sera préférentiellement en un métal non ferreux tel l'aluminium, ou bien ferreux, mais il pourra également être en un matériau polymère chargé pour être rendu semi-conducteur.

Le manchon 6 comporte également une partie 6c s'étendant sur la barre de manière à réaliser un manchonnage de la barre et destiné à améliorer les caractéristiques diélectriques du dispositif de raccordement et complète l'étanchéité diélectrique du dispositif de manchonnage le long des barres.

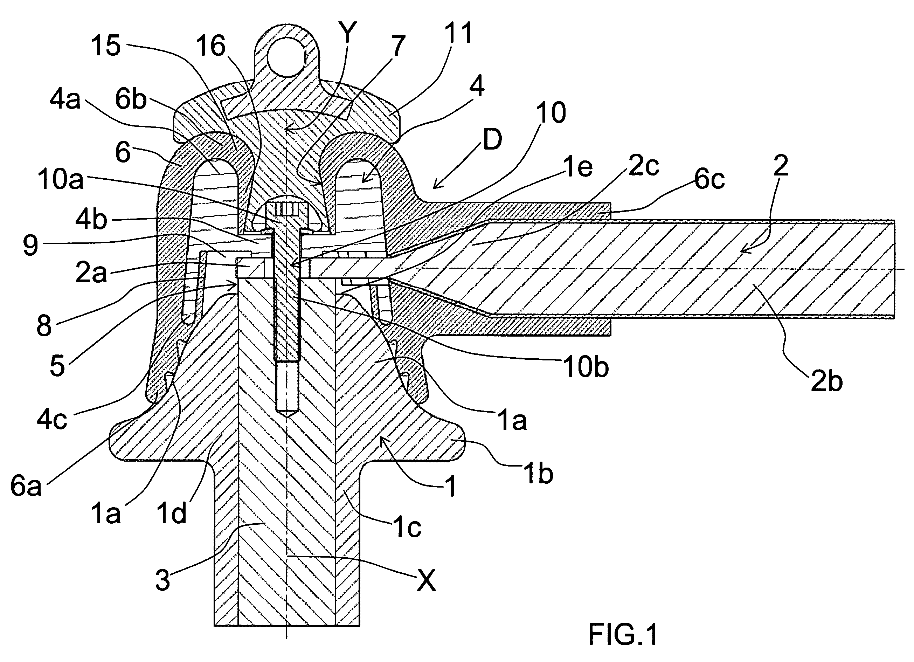

Selon la réalisation de la figure 1, un bouchon 11 est introduit dans l'orifice tubulaire 7 du dispositif, ce bouchon étant destiné à masquer l'accès au raccordement électrique.

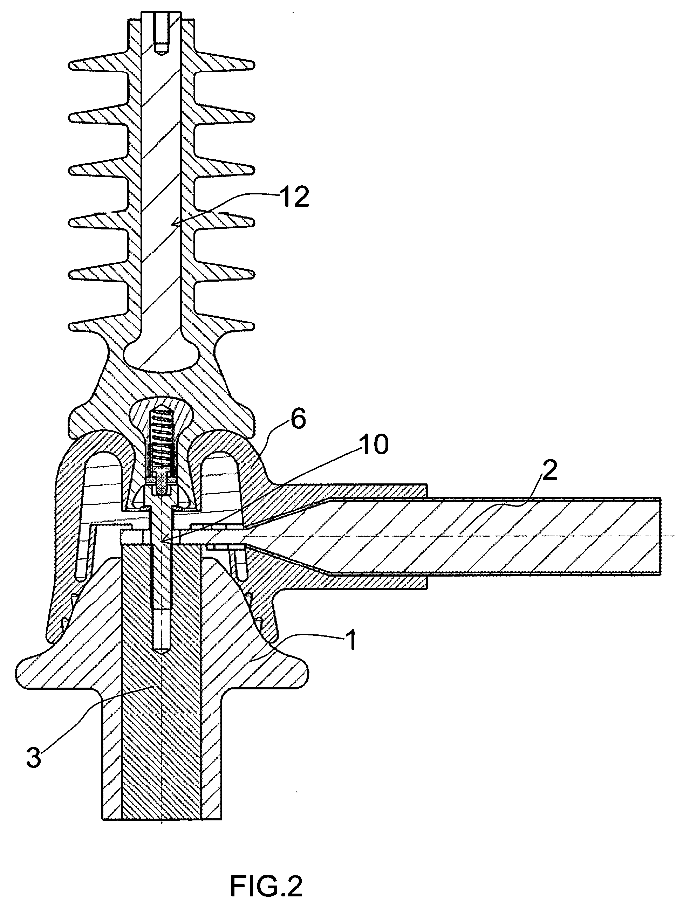

Selon une autre réalisation illustrée sur la figure 2, une capacité destinée à participer à l'indication de présence ou d'absence de tension est introduite dans cet orifice 7.

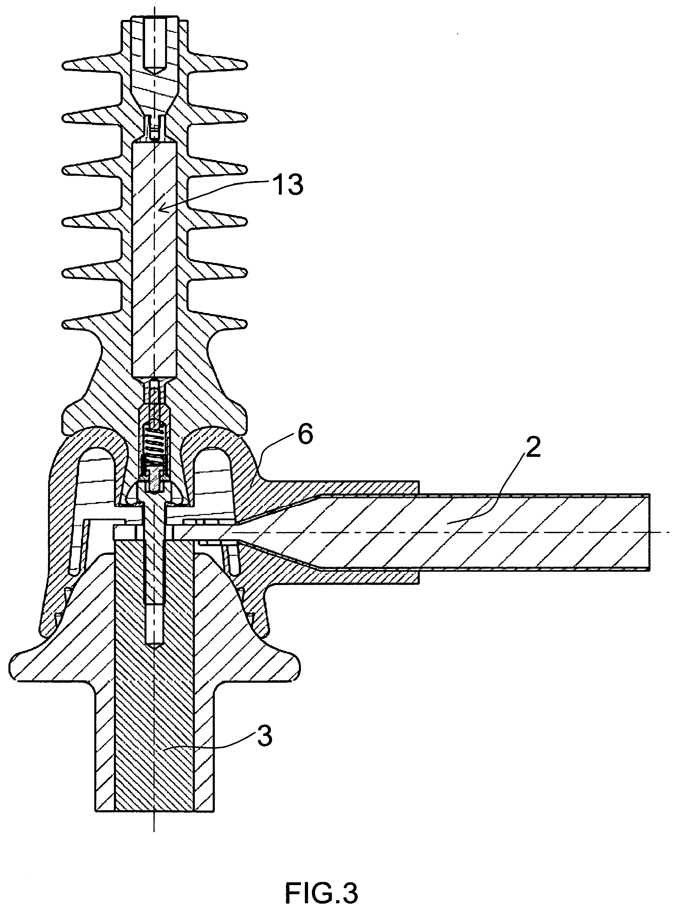

Selon une autre réalisation illustrée sur la figure 3, un diviseur capacitif 13 selon une autre réalisation est introduit également dans cet orifice dans le but de réaliser une mesure de la tension.

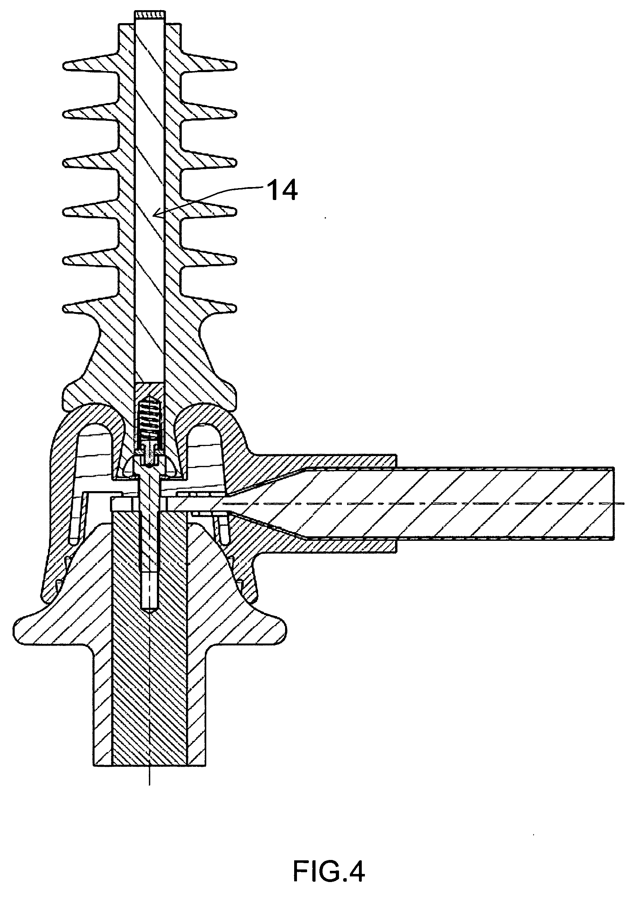

Sur la figure 4, un diviseur résistif 14 est introduit dans cet orifice afin de réaliser cette mesure.

Tous ces dispositifs sont fixés dans ledit orifice tubulaire 7 par encliquetage. Les moyens d'encliquetage comprennent une partie épaissie 15 du matériau souple de surmoulage, située à la partie supérieure de l'orifice tubulaire 7, cette partie épaissie étant suivie d'une partie 16 d'une épaisseur régulièrement diminuée jusqu'au fond de l'orifice. Ces variations d'épaisseur coopèrent avec la forme des parties des dispositifs introduits de manière à réaliser l'encliquetage du dispositif dans ledit orifice.

D'autres moyens d'encliquetage pourront être envisagés.

On a donc réalisé grâce à l'invention un dispositif de raccordement permettant d'améliorer sous l'angle diélectrique la tenue au vieillissement dans des ambiances difficiles du jeu de barres, en constituant un manchonnage ne nécessitant pas de profil particulier pour les traversées ou les sorties de raccordement de toute enveloppe contenant un appareillage électrique moyenne ou haute tension. Ainsi, il n'est pas nécessaire de modifier les moules de fabrication des pièces existantes, et il est possible de conserver des formes compactes.

L'écrantage des formes pointues des conducteurs, et donc la répartition du champ électrique, est assurée par un déflecteur-écran conducteur mis au même potentiel que le jeu de barres et surmoulé dans un matériau souple (élastomère, ou TPE par ex. : silicone EPDM,...).

L'invention tient au fait de surmouler cet écran et ainsi de lui permettre d'assurer une meilleur étanchéité diélectrique sur des formes de traversée quelconques, ledit écran assurant sa fonction d'écran de manière parfaite car sa surface extérieure est contenue dans un isolant solide avec absence de gaz entre le matériau souple et le déflecteur.

Ce surmoulage permet également d'éviter la présence d'agent polluant au point triple tout en supprimant quasiment le gaz.

Dans les réalisations illustrées, les traversées présentent des formes ressemblant à celles des isolateurs et comprennent des ailettes.

Cependant, le principe de l'invention peut s'appliquer à d'autres formes permettant à un déflecteur surmoulé d'augmenter les pressions exercées de manière à assurer une meilleure étanchéité entre le matériau souple et la traversée. Du fait de la présence de ce déflecteur, une pression plus élevée est exercée sur la traversée, cette pression du matériau élastomère sur le matériau plus dure de l'enveloppe étant dirigée de manière à s'exercer sur toute la circonférence du manchon. Le déflecteur permet donc d'uniformiser cette pression sur toute la circonférence de la traversée.

Ce manchon permet également d'évacuer les calories générées au niveau du contact électrique. En particulier, lorsqu'il est réalisé en un matériau métallique. Il faut alors veiller à choisir des matériaux de surmoulage présentant de bons coefficients d'émissivité aux fréquences de l'infrarouge.

On notera que la déformation du manchon est réalisée lors de l'assemblage du dispositif, la pression assurant l'étanchéité étant assurée par la rigidité de l'écran..

Le déflecteur permet de maintenir les dispositifs rapportés, tels le bouchon, le diviseur capacitif, le diviseur résistif ou une capacité dans une position ferme. Ainsi, le principe de ce manchon facilite l'installation de ces dispositifs, lesquels dispositifs pourraient même être installés sous tension, au moyen d'outillage garantissant la sécurité des opérateurs, et ceci sans qu'il soit nécessaire de procéder à un démontage préalable d'autres éléments.

La présente invention n'est pas limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont réalisées selon les revendications.

## Revendications

1. Dispositif de raccordement électrique (D) d'au moins une barre appartenant à un jeu de barres à une traversée électrique appartenant à l'enveloppe isolante d'un appareil électrique de coupure, ladite traversée comprenant un insert conducteur entouré au moins partiellement par une partie isolante, ledit dispositif comportant des moyens pour réaliser la connexion électrique entre une partie d'extrémité de la barre (2) et ledit insert (3) conducteur, et un déflecteur (4) formé par un écran conducteur destiné à être relié électriquement à la barre et placé autour de la zone de raccordement électrique entre la barre et ledit insert, ledit déflecteur (4) étant surmoulé dans un matériau souple, ledit matériau formant un manchon (6) de forme sensiblement cylindrique, apte à venir s'appliquer sous l'effet de la rigidité dudit déflecteur (4), par sa partie d'extrémité située du côté de l'appareil, et avec une certaine pression, sur la partie isolante précitée (1d) de la traversée (1) présentant une forme complémentaire, de manière à réaliser une parfaite étanchéité entre ledit matériau souple et la partie isolante de la traversée (1), de manière à assurer une meilleur étanchéité diélectrique sur sensiblement toute la circonférence de la partie inférieure précitée du manchon (6), la surface extérieure du déflecteur (4) étant enrobée sensiblement totalement par le matériau souple, ledit matériau constituant un isolant solide, avec absence de gaz entre le déflecteur (4) et le matériau, de manière à renforcer l'efficacité de l'écran-déflecteur (4), en ce que le déflecteur précité (4) présente une forme extérieure sensiblement conique dont la partie de plus grand diamètre se trouve vers l'intérieur de l'appareil, ledit déflecteur comportant une première partie (4a) de forme annulaire située du côté extérieur à l'appareil suivie d'une seconde partie (4b) en forme de disque, ladite seconde partie étant suivie d'une troisième partie (4c) de forme annulaire d'épaisseur réduite par rapport à l'épaisseur de la première partie et située du côté de l'appareil, **caractérisé en ce que** les moyens de connexion précités comprenant une vis (10) et un alésage (10b) formés dans l'insert (3), la seconde partie (4b) du déflecteur, en forme de disque, ainsi que l'extrémité (2a) de la barre comportant respectivement deux orifices en regard destinés à permettre le passage de la vis de fixation précitée (10), la tête de vis (10a) étant destinée à venir en appui sur ladite seconde partie (4b) du déflecteur, après vissage de la vis dans l'insert, le déflecteur étant interposé entre la tête de vis (10a) et la partie d'extrémité (2a) de la barre, laquelle partie d'extrémité étant en appui sur la partie d'extrémité de l'insert (3), le bord de la partie supérieure (6b) du manchon (6) étant plié vers l'axe Y du manchon puis vers l'intérieur de l'appareil le long de la surface du déflecteur (4), de manière à former un orifice tubulaire (7) permettant le passage de la tête de vis (10a).

2. Dispositif de raccordement selon la revendication 1, **caractérisé en ce que** la partie isolante (1d) de la traversée (1) comporte une partie de forme conique (1a) et une partie de forme évasée (1b) du côté de l'appareil.

3. Dispositif de raccordement électrique selon la revendication 1 ou 2, caractérisé en qu'il comporte un bouchon (11), un diviseur résistif (14), un diviseur capacitif (12,13) ou une capacité destinée à participer à l'indication de présence ou d'absence de tension, destiné à être mis en place à l'intérieur de l'orifice tubulaire précité (7).

4. Dispositif de raccordement électrique selon la revendication 3, **caractérisé en ce que** le bouchon (11), le diviseur résistif (14), le diviseur capacitif (12,13) ou la capacité, est fixé par des moyens d'encliquetage à l'intérieur dudit orifice (7).

5. Dispositif de raccordement électrique selon la revendication 4, **caractérisé en ce que** les moyens d'encliquetage précités comportent une partie d'épaisseur augmentée (15) prévue à l'extrémité du manchon (6b) située du côté extérieur de l'appareil, suivie d'une partie d'épaisseur régulièrement amincie (16) située à l'intérieur de l'orifice tubulaire (7).

6. Dispositif de raccordement électrique selon l'une quelconque des revendications précédentes, **caractérisé en ce que** le déflecteur précité (4) est réalisé en un métal non ferreux, tel l'aluminium, ou bien en un matériau ferreux, ou bien en un matériau polymère chargé pour être rendu semi-conducteur.

7. Dispositif de raccordement électrique selon l'une quelconque des revendications précédentes, **caractérisé en ce que** le manchon précité (6) se prolonge sur au moins une partie de la barre (2), ladite partie étant située à l'extérieur dudit déflecteur de manière à réaliser un manchonnage au moins partiel de ladite barre.

8. Dispositif de raccordement électrique selon l'une quelconque des revendications précédentes, **caractérisé en ce que** le matériau souple précité est un élastomère ou un TPE par exemple du silicone ou EPDM.

9. Dispositif de raccordement électrique selon l'une quelconque des revendications précédentes, **caractérisé en ce que** ledit appareil est un interrupteur électrique moyenne tension.

## Patentansprüche

1. Elektrische Anschlussvorrichtung (D) mindestens einer Stromschiene, die zu einem Sammelschienensystem gehört, an eine elektrische Durchführung, die zu einer isolierenden Hülle eines elektrischen Schaltgerätes gehört, wobei die Durchführung einen leitenden Einsatz aufweist, der mindestens teilweise von einem isolierenden Teil umgeben ist, Isolierschicht, wobei die Vorrichtung Mittel, um den elektrischen Anschluss zwischen einem Endteil der Stromschiene (2) und dem leitenden Einsatz (3) zu erstellen, und einen Deflektor (4) aufweist, der durch einen leitenden Schirm gebildet ist, der dazu bestimmt ist, elektrisch an die Stromschiene angeschlossen und um den elektrischen Anschlussbereich zwischen der Stromschiene und dem Einsatz angeordnet zu werden, wobei der Deflektor (4) aus einem flexiblen Material aufgeformt ist, wobei das Material eine Muffe (6) von im Wesentlichen zylindrischer Form bildet, die geeignet ist, unter der Wirkung der Steifigkeit des Deflektors (4) durch ihren Endteil, der auf der Seite des Gerätes angeordnet ist, und mit einem gewissen Druck auf dem isolierenden Teil (1d) der Durchführung (1), die eine komplementäre Form aufweist, derart aufgebracht zu werden, um eine perfekte Dichtung zwischen dem flexiblen Material und dem isolierenden Teil der Durchführung (1) derart zu erstellen, um eine bessere dielektrische Dichtung im Wesentlichen auf dem gesamten Umfang des unteren Teils der Muffe (6) zu gewährleisten, wobei die Außenfläche des Deflektors (4) im Wesentlichen vollständig von dem flexiblen Material umhüllt ist, wobei das Material zwischen dem Deflektor (4) und dem Material einen festen Isolator ohne Gas bildet, um die Wirksamkeit des Deflektorschirms (4) zu verstärken, dadurch dass der Deflektor (4) eine im Wesentlichen konischen äußeren Form aufweist, deren Teil mit dem größeren Durchmesser zum Inneren des Gerätes angeordnet ist, wobei der Defektor einen ersten ringförmigen Teil (4a) aufweist, der auf der Seite außerhalb des Gerätes angeordnet ist, der von einem zweiten scheibenförmigen Teil (4b) gefolgt ist, wobei der zweite Teil von einem dritten ringförmigen Teil (4c) mit einer Dicke, die relativ zu der Dicke des ersten Teils verringert ist, gefolgt ist und auf der Seite des Gerätes angeordnet ist, **dadurch gekennzeichnet, dass** die Anschlussmittel eine Schraube (10) und eine Bohrung (10b) aufweisen, die in dem Einsatz (3) gebildet sind, wobei der zweite scheibenförmige Teil (4b) des Deflektors und das Ende (2a) der Stromschiene jeweils zwei einander zugewandte Öffnungen aufweisen, die dazu bestimmt sind, den Durchgang der Befestigungsschraube (10) zu ermöglichen, wobei der Schraubenkopf (10a) dazu bestimmt ist, nach dem Einschrauben der Schraube in den Einsatz auf dem zweiten Teil (4b) des Deflektors in Anlage zu kommen, wobei der Deflektor zwischen dem Schraubenkopf (10a) und dem Endteil (2a) der Stromschiene angeordnet ist, dessen Endteil auf dem Endteil des Einsatzes (3) aufliegt, wobei der Rand des oberen Teiles (6b) der Muffe (6) in Richtung der Achse Y der Muffe und dann zum Inneren des Gerätes entlang der Fläche des Deflektors (4) derart gefaltet ist, um eine röhrenförmige Öffnung (7) zu bilden, die den Durchgang des Schraubenkopfes (10a) ermöglicht.

2. Anschlussvorrichtung nach Anspruch 1, **dadurch gekennzeichnet, dass** der isolierende Teil (1d) der Durchführung (1) einen Teil von konischer Form (1a) und einen Teil von ausgeweiteter Form (1b) auf der Seite des Gerätes aufweist.

3. Elektrische Anschlussvorrichtung nach Anspruch 1 oder 2, **dadurch gekennzeichnet, dass** sie einen Stecker (11), einen Spannungsteiler (14), einen kapazitiven Teiler (12, 13) oder eine Kapazität aufweist, die dazu bestimmt ist, bei der Anzeige der An- oder Abwesenheit von Spannung teilzunehmen, die dazu bestimmt ist, im Inneren der röhrenförmigen Öffnung (7) eingesetzt zu werden.

4. Elektrische Anschlussvorrichtung nach Anspruch 3, **dadurch gekennzeichnet, dass** der Stecker (11), der Spannungsteiler (14), der kapazitive Teiler (12, 13) oder die Kapazität durch Rastmittel im Inneren der Öffnung (7) befestigt ist.

5. Elektrische Anschlussvorrichtung nach Anspruch 4, **dadurch gekennzeichnet, dass** die Rastmittel einen Teil mit erhöhter Dicke (15) aufweisen, der am Ende der Muffe (6b) vorgesehen ist, der auf der Außenseite des Gerätes angeordnet ist, gefolgt von einem Teil mit regelmäßig verdünnter Dicke (16), der im Inneren der röhrenförmigen Öffnung (7) angeordnet ist.

6. Elektrische Anschlussvorrichtung nach einem der vorhergehenden Ansprüche, **dadurch gekennzeichnet, dass** der Deflektor (4) aus einem Nichteisenmetall wie Aluminium oder aus einem eisenhaltigen Material oder aus einem Polymermaterial, das geladen ist, um halbleitend gemacht zu werden, hergestellt ist.

7. Elektrische Anschlussvorrichtung nach einem der vorhergehenden Ansprüche, **dadurch gekennzeichnet, dass** sich die Muffe (6) auf mindestens einem Teil der Stromschiene (2) erstreckt, wobei der Teil außerhalb des Deflektors derart angeordnet ist, um eine mindestens teilweise Muffenverbindung der Stromschiene zu erstellen.

8. Elektrische Anschlussvorrichtung nach einem der vorhergehenden Ansprüche, **dadurch gekennzeichnet, dass** das flexible Material ein Elastomer oder ein TPE, zum Beispiel Silikon oder EPDM ist.

9. Elektrische Anschlussvorrichtung nach einem der vorhergehenden Ansprüche, **dadurch gekennzeichnet, dass** das Gerät ein elektrischer Mittelspannungsschalter ist.

## Claims

1. Electrical connection device (D) for at least one bar belonging to a busbar with an electric feedthrough belonging to the insulating enclosure of an electric breaking apparatus, said feedthrough comprising a conductive insert surrounded at least partially by an insulating part, said device comprising means for producing the electrical connection between an end part of the bar (2) and said conductive insert (3), and a deflector (4) formed by a conductive screen intended to be linked electrically to the bar and placed around the electrical connection zone between the bar and said insert, said deflector (4) being overmoulded in a flexible material, said material forming a sleeve (6) of substantially cylindrical form, suitable for being pressed, under the effect of the rigidity of said deflector (4), by its end part situated on the side of the apparatus, and with a certain pressure, onto the abovementioned insulating part (1d) of the feedthrough (1) having a complementary form, so as to produce a perfect seal between said flexible material and said insulating part of the feedthrough (1), so as to ensure a better dielectric seal over substantially all the circumference of the abovementioned bottom part of the sleeve (6), the outer surface of the deflector (4) being coated substantially totally by the flexible material, said material constituting a solid insulator, with absence of gas between the deflector (4) and the material, so as to reinforce the effectiveness of the deflector-screen (4), in that the abovementioned deflector (4) has a substantially tapered outer form of which the larger diameter part is located towards the interior of the apparatus, said deflector comprising a first part (4a) of annular form situated on the outside of the apparatus followed by a second part (4b) in disc form, said second part being followed by a third part (4c) of annular form of reduced thickness relative to the thickness of the first part and situated on the side of the apparatus, **characterized in that** the abovementioned connection means comprising a screw (10) and a bore (10b) formed in the insert (3), the second part (4b) of the deflector, in disc form, and the end (2a) of the bar respectively comprising two orifices facing one another intended to allow the passage of the abovementioned fixing screw (10), the screw head (10a) being intended to come to bear on said second part (4b) of the deflector, after the screw has been screwed into the insert, the deflector being interposed between the screw head (10a) and the end part (2a) of the bar, said end part bearing on the end part of the insert (3), the edge of the top part (6b) of the sleeve (6) being folded towards the Y axis of the sleeve then towards the interior of the apparatus along the surface of the deflector (4), so as to form a tubular orifice (7) allowing for the passage of the screw head (10a).

2. Connection device according to Claim 1, **characterized in that** the insulating part (1d) of the feedthrough (1) comprises a part of conical form (1 a) and a part of flared form (1 b) on the side of the apparatus.

3. Electrical connection device according to Claim 1 or 2, **characterized in that** it comprises a plug (11), a resistive divider (14), a capacitive divider (12, 13) or a capacitor intended to participate in the indication of presence or absence of voltage, intended to be placed in the abovementioned tubular orifice (7).

4. Electrical connection device according to Claim 3, **characterized in that** the plug (11), the resistive divider (14), the capacitive divider (12, 13) or the capacitor is fixed by snap-fitting means in said orifice (7).

5. Electrical connection device according to Claim 4, **characterized in that** the abovementioned snap-fitting means comprise a part of increased thickness (15) provided at the end of the sleeve (6b) situated on the outside of the apparatus, followed by a part of evenly thinned thickness (16) situated in the tubular orifice (7).

6. Electrical connection device according to any one of the preceding claims, **characterized in that** the abovementioned deflector (4) is produced in a non-ferrous metal, such as aluminium, or even in a ferrous metal, or even in a polymer material filled in such a way as to be made semi-conductive.

7. Electrical connection device according to any one of the preceding claims, **characterized in that** the abovementioned sleeve (6) is prolonged over at least a part of the bar (2), said part being situated on the outside of said deflector so as to produce an at least partial sleeving of said bar.

8. Electrical connection device according to any one of the preceding claims, **characterized in that** the abovementioned flexible material is an elastomer or a TPE, for example silicone or EPDM.

9. Electrical connection device according to any one of the preceding claims, **characterized in that** said apparatus is a medium voltage electrical switch.
